(19) Europäisches Patentamt / European Patent Office / Office européen des brevets

(11) **EP 1 742 895 B1**

(12) **FASCICULE DE BREVET EUROPEEN**

(45) Date de publication et mention
de la délivrance du brevet:
**22.12.2010 Bulletin 2010/51**

(21) Numéro de dépôt: **05763679.7**

(22) Date de dépôt: **28.04.2005**

(51) Int Cl.:
*C04B 28/06* (2006.01)   *H01L 23/15* (2006.01)
*H01L 23/14* (2006.01)   *B28B 19/00* (2006.01)

(86) Numéro de dépôt international:
**PCT/FR2005/001061**

(87) Numéro de publication internationale:
**WO 2005/115943 (08.12.2005 Gazette 2005/49)**

(54) **PREPARATION DE FILMS DE CIMENT PAR COULAGE EN BANDE**

HERSTELLUNG VON ZEMENTSCHICHTEN MITTELS DÜNNBANDGIESSEN

PREPARATION OF CEMENT FILMS BY STRIP CASTING

(84) Etats contractants désignés:
**AT BE BG CH CY CZ DE DK EE ES FI FR GB GR HU IE IS IT LI LT LU MC NL PL PT RO SE SI SK TR**

(30) Priorité: **29.04.2004 FR 0404584**

(43) Date de publication de la demande:
**17.01.2007 Bulletin 2007/03**

(73) Titulaires:
• **Ecole National Supérieure de Céramique Industrielle (E.N.S.C.I.)**
**87065 Limoges (FR)**
• **Ecole Nationale Superieure de Ceramique Industrielle**
**87065 Limoges Cedex (FR)**

(72) Inventeurs:
• **CHARTIER, Thierry**
**F-87220 FEYTIAT (FR)**
• **EL HAFIANE, Youssef**
**F-87000 LIMOGES (FR)**
• **SMITH, Agnès**
**F-87100 LIMOGES (FR)**
• **BONNET, Jean-Pierre**
**F-33360 CARIGNAN DE BORDEAUX (FR)**

(74) Mandataire: **Colombet, Alain André et al**
**Cabinet Lavoix**
**2, Place d'Estienne d'Orves**
**75441 Paris Cedex 09 (FR)**

(56) Documents cités:
WO-A-01/76534    FR-A- 2 778 787
GB-A- 1 288 613    US-A- 4 394 175

• BORGLUM BRIAN P ET AL: "Electrical properties of chemically bonded ceramics based on calcium aluminate" ADV CEM BASED MAT; ADVANCED CEMENT BASED MATERIALS OCT 1993 ELSEVIER SCIENCE PUBL CO INC, NEW YORK, NY, USA, vol. 1, no. 1, octobre 1993 (1993-10), pages 47-50, XP008041100
• DATABASE CA [Online] CHEMICAL ABSTRACTS SERVICE, COLUMBUS, OHIO, US; NAKAJIMA, HIROSHI: "Rapid setting agent for blowing concrete and its production method, and blowing method of blowing concrete" XP002312575 extrait de STN Database accession no. 139: 311006 & JP 2003 292355 A2 (TAIHEIYO MATERIALS CORPORATION, JAPAN) 15 octobre 2003 (2003-10-15)
• FRANCIS J: "Cement-based chemically bonded electrical ceramics" MATER TECHNOL; MATERIALS TECHNOLOGY MAR-APR 1994, vol. 9, no. 3-4, mars 1994 (1994-03), pages 63-67, XP008041099
• CHEMICAL ABSTRACTS, vol. 109, no. 14, 3 octobre 1988 (1988-10-03), Columbus, Ohio, US; abstract no.: 115262y, H.SHIMATANI: "Rapid-setting self-leveling materials for floors" XP000157745 & JP 63 129051 A (OSAKA CEMENT) 1 juin 1988 (1988-06-01)
• HEWLETT P C (ED): "LEA'S CHEMISTRY OF CEMENT AND CONCRETE, PASSAGE" 1998, LEA'S CHEMISTRY OF CEMENT AND CONCRETE, OXFORD : BUTTERWORTH-HEINEMANN, GB, PAGE(S) A,751-753 , XP002312574 ISBN: 0-340-56589-6 tableau 13.11

EP 1 742 895 B1

• EL HAFIANE Y ET AL: "Effect of an organic additive on the rheology of an aluminous cement paste and consequences on the densification of the hardened material" JOURNAL DE PHYSIQUE IV, EDITIONS DE PHYSIQUE. LES ULIS CEDEX, FR LNKD- DOI:10.1051/JP4:2005123032, vol. 123, 1 March 2005 (2005-03-01), pages 189-192, XP008120727 ISSN: 1155-4339

## Description

La présente invention concerne un procédé de préparation de pièces de ciment ainsi qu'une suspension de ciment utile pour sa mise en oeuvre. Elle concerne également les pièces de ciment ainsi obtenues et leurs applications, notamment à titre de composants pour la micro-électronique.

Les composants tels que les substrats de circuits intégrés ou condensateurs multicouches sont habituellement fabriqués en matériaux céramiques dit « techniques ». Ces matériaux présentent les propriétés électriques requises et peuvent être mis en forme en films ayant une épaisseur et un état de surface contrôlés.

Une des principales techniques de mise en forme de ces céramiques est le coulage en bande. Il consiste à préparer une suspension stable de poudre dans un solvant, généralement organique, en présence d'additifs tels que des dispersants, liants et plastifiants. La suspension est coulée sur un support puis éventuellement laminée par pressage entre la lame du sabot et le support. Après évaporation du solvant, la film est délianté et fritté à température élevée.

Cette technique permet le façonnage de films céramiques de faible épaisseur, c'est-à-dire typiquement entre 25 microns et 2 mm, et de grande surface, avec un état de surface et une résistance mécanique satisfaisantes. Cependant, les matières premières pour ces matériaux, sont assez coûteuses. Par ailleurs, le procédé de préparation met en oeuvre des solvants en quantité importante. Enfin, l'étape de frittage nécessite un traitement thermique à haute température.

L'invention a donc pour objet de proposer un procédé permettant de préparer des pièces convenant notamment comme composants pour l'électronique peu coûteux et respectueux de l'environnement.

Plus spécifiquement, l'invention propose un procédé de préparation de pièces de ciment par coulage en bande et en moule.

On entend par le terme « pièce » désigner des films, obtenus en particulier par coulage en bande, et des pièces non plates, de dimension et forme très variée, obtenues par exemple par moulage.

En effet, les ciments sont d'un coût modeste. Ils peuvent être mis en oeuvre par un procédé écologiquement propre. Enfin, leur préparation présente un coût énergétique réduit puisque la consolidation peut s'opérer à température ambiante.

Toutefois, le procédé de coulage en bande et en moule nécessite le contrôle de nombreux paramètres de la suspension, notamment ceux relatifs au comportement rhéologique de la suspension. Ces paramètres dépendent de la nature et de la teneur des constituants de la suspension (solvant, dispersant, liant, plastifiant) ainsi que des caractéristiques physico-chimiques de la poudre. Dans le cas particulier du ciment, les phénomènes physico-chimiques liés à l'hydratation dépendent en outre du temps et de la température.

B.P. Borglum et al. (Advanced Cement Based Materials; Elsevier Science Publ. Oct. 1993, Vol 1, No 1, p. 47-50) propose un système dispersant à base d'un acide citrique, un lignosulfonate et un produit de condensation de l'acide naphtalène sulfonique et de formaldehyde pour un ciment aluminocalcique en suspension coulable.

Y.El Hafiane et al. (J.Phys. IV France 123 (2005) p.189-192; d.o.i. 10.1051/jp4:2005123032) décrit un additive organique à base d'acide acétique pour influencer la rhéologie des suspensions des ciments aluminocalciques.

Ainsi, un premier objet de l'invention est de proposer une suspension de ciment compatible avec le procédé de coulage en bande et en moule.

La suspension de ciment

La suspension selon l'invention présente d'une part un comportement rhéologique compatible avec le procédé de coulage en bande et en moule.

La viscosité apparente, dite aussi dynamique $\eta$, est le rapport entre la contrainte de cisaillement, $\tau$, sur le gradient de vitesse de cisaillement, $\gamma$.

On distingue parmi les différents comportements rhéologiques les fluides dits de Newton, les rhéoépaississants et les rhéofluidifiants.

Pour les fluides de type newtonien, le coefficient de proportionnalité entre la contrainte de cisaillement et le gradient de vitesse de cisaillement est constante : c'est la viscosité. Un comportement rhéofluidifiant ou pseudoplastique est caractérisé par une diminution de la viscosité apparente lorsque le gradient de vitesse augmente. Au contraire, on est en présence d'un comportement rhéoépaississant ou dilatant lorsque la viscosité apparente augmente avec le gradient de vitesse.

De préférence, la suspension présente un comportement rhéofluidifiant. Un tel comportement assure un bon étalement lors du coulage et évite la sédimentation de la suspension. Par ailleurs, la suspension présente avantageusement une viscosité adaptée à son coulage, généralement comprise entre 0.5 et 2 Pa.s.

Plus précisément, la suspension de ciment comprend, par rapport à la masse de ciment :

- 22 à 35 % en poids d'eau ;
- 1 à 10 % en poids d'acide acétique;

- jusqu'à 8 % en poids de plastifiant ; et
- 0 à 2 % en poids de dispersant.

La suspension peut être préparée en utilisant tout type de ciment, tel que ciment de Portland ou ciment aluminocalcique. Son choix dépendra essentiellement de l'application visée.

Toutefois, le ciment alumino-calcique présente certains avantages, tels qu'un développement rapide des résistances mécaniques. Par ailleurs, sa richesse en alumine lui confère une faible basicité et donc une bonne résistance aux agressions chimiques ainsi qu'un caractère réfractaire.

De préférence, le ciment alumino-calcique comprend 60 % à 80 %, et en particulier 65 à 75 % en poids d'alumine et 15 à 35% de CaO et enfin 0.1 à 5% d'autres composés, notamment des oxydes tels que $SiO_2$, $MgO$, $Fe_2O_3$.

La distribution granulométrique du ciment et la forme des particules sont d'importance pour le comportement rhéologique et la dispersion de la suspension. Elles influencent également la microstructure et les propriétés finales du matériau durci.

En effet, un faible diamètre moyen de particules permet d'obtenir une surface spécifique élevée et de ce fait une réactivité élevée de la poudre. De telles suspensions sont stables mais nécessitent l'utilisation d'une quantité importante d'additifs organiques, ce qui réduit la densité en cru des films.

La taille des particules de ciment dans la suspension retenue constitue donc généralement un compromis entre facilité de mise en forme et réactivité des poudres.

Si nécessaire, la taille de particules trop élevée d'un ciment peut être réduite par l'un des procédés connus. On peut citer à titre d'exemple le broyage, notamment le broyage par attrition. Ce type de broyage procède à l'agitation d'objets durs (par exemple des billes d'alumine) dans la poudre à broyer mélangée à un solvant.

On constate cependant que le tamisage permet l'obtention de distributions granulométriques très proches de celles obtenues par broyage pour un effort bien moindre. Ainsi, on préfère extraire la fraction de particules de ciment de taille moyenne de particules souhaitée au moyen d'un tamisage.

La taille du tamis choisi est notamment fonction de l'épaisseur du film à préparer. De manière générale, on choisira un tamis de 20 à 100 microns, de préférence de 30 à 50 microns.

La quantité de solvant (eau) présente dans la suspension de ciment est fonction du taux de chargement souhaité. Le taux de chargement est défini comme étant le rapport pondéral ou volumique entre le ciment et le solvant additionné des additifs. Il est fixé selon la viscosité souhaitée.

Dans le cas du ciment, lorsque le solvant est l'eau, on définit habituellement un ratio E/C, qui exprime le rapport pondéral entre l'eau et le ciment. De préférence, la suspension selon l'invention présente un ratio E/C de 0,22 à 0,35.

La suspension de ciment comprend en outre des additifs jouant chacun un rôle bien défini. Ces constituants influencent chacun le comportement rhéologique de la suspension, ainsi que le comportement d'hydratation. Par ailleurs, ils peuvent avoir un impact sur la microstructure du matériau durci et par conséquent sur les propriétés de celui-ci.

En effet, il ne suffit pas qu'une suspension présente une rhéologie permettant de réaliser le coulage en bande ou en moule. Il convient par ailleurs que le film coulé ou la pièce développe une résistance suffisante pour permettre sa manipulation.

Selon l'invention, la suspension de ciment comprend de l'acide acétique, principalement comme adjuvant régulateur de prise. Cet additif a toutefois également une fonction de dispersant.

En effet, l'acide acétique présente, à faible concentration, un effet retardateur de prise. En revanche, à concentration plus élevée, il conduit à une prise au contraire très rapide, typiquement en deux heures.

Pour le coulage en bande, on recherche une prise rapide pour permettre une manipulation aisée des films et permettre une cadence de production élevée. Une suspension de ciment pour coulage en bande comprend typiquement 1 à 10, de préférence 1 à 5, et en particulier 1 à 3 % en poids d'acide acétique par rapport à la masse de ciment.

Par ailleurs, on peut ajouter à la suspension un dispersant proprement dit. Le dispersant permet de stabiliser une suspension comprenant un rapport solide/liquide important vis-à-vis des forces de sédimentation et d'agglomération.

Ce dispersant peut être choisi parmi ceux habituellement utilisés pour les ciments. Particulièrement appropriés sont par exemple les poly(méth)acrylates d'ammonium, les polynaphtalènes sulfonates de sodium et les acides carboxyliques en $C_1$ à $C_4$.

La quantité de dispersant ajoutée dépend notamment de la taille de particules du ciment ainsi que du taux de chargement. Généralement, une quantité de 0 à 4 % en poids de dispersant par rapport au ciment est appropriée pour les valeurs envisagées.

La suspension comprendra ainsi 0 à 2, de préférence 0,1 à 0.5 % en poids de dispersant autre que l'acide acétique.

La suspension peut en outre comprendre un liant, si nécessaire, afin de conférer à la pièce une meilleure cohésion.

Le liant est choisi principalement en fonction du solvant de la composition.

Les liants organiques comportent généralement des longues chaînes polymériques. Ces molécules s'adsorbent à la surface des particules entre lesquelles elles créent des ponts. Il se forme alors un squelette rigide, lequel permet d'assurer une résistance mécanique suffisante au film obtenu.

Parmi les liants habituellement utilisés en milieu aqueux, on peut citer les latex acryliques, les dérivés de la cellulose et les alcools polyvinyliques (PVA).

Le liant choisi présente de préférence une faible température de transition vitreuse afin de ne pas accroître de façon trop importante la viscosité de la suspension.

Dans le cas du ciment, un liant n'est pas indispensable dans la mesure où l'eau joue à la fois le rôle de solvant et celui de liant, en conduisant à la consolidation du ciment par le processus d'hydratation.

La suspension peut en outre comprendre un plastifiant, afin de conférer au film cru une certaine flexibilité et participer au développement du comportement rhéologique adéquat.

Le plastifiant choisi peut être choisi dans ceux habituellement utilisé dans le cas des céramiques. En particulier conviennent les plastifiants choisis dans le groupe des glycols, tels que le polyéthylèneglycol, tels que le polyéthylèneglycol 300 (PEG 300) et des phtalates, tel que le dibutylphtalate.

La quantité de plastifiant est choisie de manière à être suffisante pour assurer l'effet recherché, sans être excessive, afin d'éviter une éventuelle dégradation de la contrainte à la rupture du film obtenu.

Généralement, la suspension de ciment pour le coulage en bande comporte 0,1 à 8, de préférence 2 à 5 et en particulier 3 à 4 % en poids de plastifiant.

Des matériaux de renforcement peuvent être ajoutées à la suspension afin d'améliorer la résistance mécanique du film obtenu.

L'addition de fibres, notamment des fibres en verre ou en polymère ou des fibres d'origine naturelle, telles que des fibres végétales est préférée.

La proportion de matériau de renforcement dépendra du matériau choisi et surtout des propriétés mécaniques requises du film.

Généralement, on ajoutera 0,01 à 10 % de fibres par rapport au volume de ciment.

La suspension peut enfin également contenir d'autres additifs habituellement utilisés dans le domaine, tels que des pigments, charges, régulateurs de prise ou agents anti-mousse.

De préférence, la suspension de ciment ne comporte des composés organiques qu'en petites quantités. En particulier, elle ne comprend avantageusement pas de solvant organique.

Le procédé de préparation de la suspension

La stabilité des suspensions de ciment peut dépendre de l'ordre dans lequel les constituants sont introduits. On entend par la notion de stabilité plus précisément son homogénéité et l'absence d'agglomération ou sédimentation au cours du procédé d'élaboration du matériau durci.

Dans ce cadre, il est notamment préférable d'incorporer le dispersant avant les autres additifs pour faciliter la dispersion des particules de ciment dans l'eau. Il est supposé que l'adsorption d'autres additifs sur les particules de ciment entre en compétition avec celle du dispersant et réduit donc son efficacité.

La suspension de ciment est préparée par un procédé comprenant les étapes de :

 i) dispersion du ciment dans l'eau, le cas échéant en présence du dispersant ;
 ii) le cas échéant, addition du plastifiant ;
 iii) homogénéisation ; et, si nécessaire
 iv) désaération.

Avantageusement, le plastifiant est ajouté à la suspension sous forme de solution dans une partie du solvant.

L'homogénéisation est commodément réalisée par malaxage de la suspension. La désaération de la suspension permet d'éliminer les bulles d'air générées pendant le malaxage. Elle peut être réalisée par exemple sur des rouleaux tournants ou d'une autre manière connue en soi.

La suspension ainsi préparée est de préférence coulée sans délai afin de ne pas laisser la suspension évoluer vers le processus d'hydratation.

Le procédé de préparation des pièces de ciment

Une fois la suspension de ciment préparée, le procédé de préparation de films ou pièces de ciment comprend les étapes de :

 a) fourniture d'un support ou d'un moule ;
 b) introduction de la suspension de ciment dans un réservoir ;

c) coulage d'une quantité appropriée de ladite suspension par laminage à partir du réservoir sur ledit support ou ledit moule.

Le support et le moule peuvent être en un quelconque matériau habituellement utilisé pour la mise en forme des céramiques, tel que l'acier inoxydable, le verre ou le plastique.

Le procédé peut être réalisé en continu ou en discontinu. Dans le premier cas, et pour un coulage en bande, l'étape c) est réalisée avec un dispositif dans lequel le support se déplace sous un réservoir fixe. Dans le deuxième cas, le réservoir se déplace sur un support fixe.

Dans le cas du coulage continu, le support est mobile dans une trajectoire qui n'est pas toujours droite, exigeant ainsi une certaine élasticité du support. On préfère alors utiliser des supports en acier inoxydable. Dans le cas du coulage non continu, le support en verre est préféré pour des raisons de coûts.

Pour plus de détails sur le procédé de coulage en bande en tant que tel, il est renvoyé à T. Chartier « Procédés de mise en forme des céramiques » dans « Matériaux et processus céramiques », Hermès Science Publication, Paris, 2001, 141-217.

Avantageusement, le substrat (support ou moule) est préalablement enduit d'un revêtement anti-adhérent. De tels revêtements sont connus, en particulier à base de silicone.

La pièce ainsi obtenu durcit par processus d'hydratation du ciment à température ambiante.

Avantageusement, le procédé comprend en outre l'étape de :

d) consolidation de la pièce en milieu humide.

Le milieu humide peut être en particulier de l'air saturée en humidité ou l'eau. Cette étape permet alors de parfaire une hydratation du ciment plus importante et d'aboutir ainsi à des pièces de ciment présentant une tenue mécanique suffisante.

La consolidation des pièces de ciment dans l'eau est particulièrement avantageuse pour les films préparés par coulage en bande en ce qu'elle permet d'éliminer les produits organiques du ciment par solubilisation. Ce processus est plus simple que celui de déliantage thermique utilisé pour les céramiques, lequel nécessite un traitement thermique à des températures élevées (500 - 600°C).

Ainsi, la température de cette étape est de préférence modeste comparée à la température nécessaire au frittage des céramiques, à savoir inférieure à 50-60°C et tout particulièrement la température ambiante.

Enfin, les pièces sont de préférence soumises à un traitement thermique permettant d'éliminer l'eau libre afin d'améliorer leurs propriétés électriques et réduire leur coefficient de dilatation. Ce traitement peut être réalisé à basse température, typiquement entre 100 et 300°C.

## Les pièces obtenues

La surface des pièces de ciment ainsi préparées présente généralement une très faible rugosité, Ra, à savoir inférieure à 1 micron, de préférence inférieure à 750 nm, et en particulier inférieur à 500 nm. Par ailleurs, les pièces de ciment ainsi préparées ne présentent pas de fissures visibles à l'oeil nu.

Les pièces de ciment obtenues présentent par ailleurs après traitement thermique une faible constante diélectrique. Typiquement, la constante diélectrique est voisine de 10 après un traitement thermique à 200°C et reste inchangée entre 1 MHz et 850 MHz.

Aussi, les pièces de ciment ainsi obtenuss présentent un faible coefficient de dilatation ($6.8 \cdot 10^{-6}$ entre 25 et 1200°C pour un film soumis à un traitement thermique).

Enfin, les pièces de ciment contenant de l'eau liée ou libre présentent une diffusivité importante. Cette propriété étant proportionnelle à la conductivité thermique, on s'attend à ce que les pièces présentent une conductivité thermique importante.

Les propriétés physiques des pièces de ciment obtenues les rendent intéressantes pour une application en électronique, notamment en tant que substrat pour les cartes électroniques. Des applications même à température élevée peuvent être considérées dans la mesure où les pièces sont à base de ciment alumineux. Les propriétés mécaniques peuvent être encore améliorées en ajoutant des matériaux de renforcement comme des fibres.

Enfin, les pièces, notamment ceux renforcés par des fibres, peuvent aussi trouver des applications dans d'autres domaines, notamment dans le bâtiment.

L'invention sera expliquée plus en détail dans les exemples non limitatifs ci-après

## EXEMPLES

Sauf indication contraire, les proportions données ci-après s'entendent en % en poids par rapport au poids du ciment.

## Caractérisation rhéologique des suspensions

Les mesures rhéologiques ont été réalisées à l'aide d'un rhéomètre à cylindres rotatifs en régime permanent (HAAKE Viscotester VT550 avec le dispositif de-mesure MVII). Ce dispositif permet la mesure de la contrainte de cisaillement $\tau$ en fonction du gradient de vitesse $\gamma$.

Le protocole opératoire suivi pour mesurer la viscosité est le suivant :

- une montée de vitesse de 0,1 jusqu'à 100 $s^{-1}$ pendant 30 secondes ;
- un temps d'attente égal à la durée de la montée au gradient de vitesse maximal (30 secondes) ;
- une descente de gradient de vitesse pendant la même durée que la montée (30 secondes) jusqu'à une valeur de gradient de vitesse égale à 0,1 $s^{-1}$.

## Caractérisations mécaniques

Deux types d'essais ont été effectués, d'une part concernant le matériau durci en tant que tel, et d'autre part concernant le film. 1) Caractérisation de la résistance mécanique des échantillons en présence d'acide acétique seul . Le test de résistance mécanique que nous avons utilisé est un test de résistance à la compression sur des cylindres d'une épaisseur, e, de 20 mm et d'un diamètre, D, de 33 mm.

La résistance à la compression, $\sigma_R$ est donnée par le rapport : force appliquée $F_a$ sur la surface du section du cylindre (1) :

$$\sigma_R = \frac{F_a}{\pi\left(\dfrac{D}{2}\right)^2} \quad (1)$$

2) caractérisation de la résistance mécanique des films (résultat d'exemple 6). La résistance mécanique des films a été évaluée au moyen d'un test de flexion quatre points sur des plaques de dimensions (Longueur x largeur : b x épaisseur: h) 100 x 20 x 1 $mm^3$.

La plaque repose sur deux appuis simples distants de u et la charge $F_a$ est appliquée en deux points, distants de v, symétriques par rapport au milieu de la travée. Si l'éprouvette est de section b x h, la résistance $\sigma_R$ est donnée par l'équation (2) :

$$\sigma_R = \frac{3F_a(u - v)}{bh^2} \quad (2)$$

La distance entre appuis u est de 40 mm, la distance v entre les points d'application des efforts est de 20 mm.

Ces tests sont réalisés à l'aide d'un dispositif M30K (J. J. Instruments SA).

## Caractérisation microstructurale du matériau durci

La rugosité des films a été mesurée au moyen d'un rugosimètre PERTHOMETER C5D.

Après 2 heures de prise à l'air, les films ont été introduits dans l'eau pour compléter l'hydratation et éliminer les composés organiques et conservés dans l'eau pendant 4 jours.

La porosité a été évaluée par porosimétrie à mercure au moyen du dispositif AUTOPORE II Micrometrics 9200.

## Caractérisation thermique et électrique

La diffusivité du matériau durci a été mesurée par la méthode flash laser en face arrière. On envoie une impulsion thermique très brève sur la face avant de l'échantillon en forme de disque et on enregistre la variation de la température sur la face arrière.

Le coefficient de dilatation a été déterminé à l'aide d'un dilatomètre ADAMEL DI24 avec une vitesse de chauffe de 10°C/min jusqu'à 1300°C et sous un balayage d'air.

La permittivité diélectrique est mesurée sur des pastilles cylindriques du matériau durci à l'aide d'un analyseur d'impédance HP 4291 A.

## EXEMPLE 1

Préparation d'une suspension de ciment

On a gâché 29,7 g (90 % de la masse d'eau totale 33 g) d'eau distillée additionnée de 2 g d'acide acétique et de 0,1 g de Bevaloïd 35 L (de chez Rhodia) avec 100 g de ciment (SECAR 71 de Lafarge).

On a ajouté ensuite 3,3 ml d'eau (les 10 % restants) additionné de 4 g de plastifiant (PEG 300 de chez Prolabo) puis on a encore malaxé. Le malaxage a été réalisé dans un robot ménager (Kenwood) selon la norme NF EN 196-3 - en plusieurs étapes :

a) mélange du ciment avec 90 % du solvant additionné du dispersant pendant 90 s à vitesse lente (vitesse 1) ;
b) arrêt de la machine pendant 15 s, raclage des parois du bol du malaxeur ;
c) mélange pendant 90 s à vitesse rapide (vitesse 3) ;
d) arrêt de la machine pendant 15 s, raclage des parois du bol du malaxeur ;
e) addition des 10 % restants d'eau additionnés du plastifiant et liant, le cas échéant;
f) mélange pendant 90 s à faible vitesse (vitesse 1).

Le rapport E/C de la suspension est de 0.33.

Les propriétés physiques des films de ciment ont été caractérisées comme indiqué ci-dessus. Les résultats sont portés dans le tableau 1.

Le dispositif de coulage en bande utilisé est commercialisé par la société ELMCERAM à ORADOUR / VAYRES 87150.

La surface des films de ciment obtenus est exempte de fissures et présente une rugosité, Ra, inférieure à 1 micron.

La constante diélectrique mesurée est voisine de 10 après un traitement thermique à 200°C et reste inchangée entre 1 MHz et 850 MHz.

Enfin, après ce même traitement thermique, les films de ciment ainsi obtenus présentent un coefficient de dilatation de $6.8 \cdot 10^{-6}$ C°$^{-1}$ entre 25 et 1200°C.

Tableau 1

| Echantillon | Rugosité, Ra (nm) | Constante diélectrique, $\varepsilon_r$' | Coefficient de dilatation (C°$^{-1}$) |
|---|---|---|---|
| Exemple 1 | < 500 | ~ 10 | $6.8 \ 10^{-6}$ |

Il ressort de ce qui précède que le procédé de coulage en bande de suspensions de ciment décrit permet l'obtention de films de ciment dont les caractéristiques physiques ainsi que le comportement thermique sont compatibles avec une application, notamment en électronique.

## EXEMPLES 2 à 5

Afin d'étudier l'influence de l'acide acétique sur la prise ainsi que sur la microstructure du matériaux du matériau durci, on a préparé des suspensions de ciment (SECAR 71 de Lafarge tamisé à 40 microns) selon l'exemple 1 (sans les autres ajouts) en variant le rapport pondéral acide acétique / ciment, le ratio E/C étant maintenu à 0,6.

Le pourcentage d'acide acétique ($m_{HOAc}/m_{ciment}$) x 100 est de 0 ; 0,5 ; 1 et 5% masse, respectivement.

Le temps de début de prise des suspensions a été déterminé à 20°C par le test de l'aiguille Vicat. On constate que le temps de début de prise d'une suspension ne contenant pas d'acide acétique est d'environ 6 h, le temps passe à 43 h pour une suspension contenant 0,1 % en poids d'acide acétique. Ce retard de prise s'accentue et atteint 52 h avec 0,5 % en poids d'acide acétique. En revanche, le temps de début de prise chute ensuite brutalement pour atteindre 2 h avec 1 % en poids d'acide acétique. Au-delà de ce pourcentage, il varie peu.

Ainsi, la présence d'acide acétique dans la suspension de ciment en une concentration appropriée permet la prise rapide du film de ciment.

Un pourcentage au-delà de 1 % d'acide acétique conduit à des films de résistance mécanique améliorée. La présence de 5 % d'acide acétique permet ainsi de multiplier par un facteur d'environ 4 la contrainte à la rupture.

Par ailleurs, on constate que le volume poreux ouvert des produits durcis est inférieur à 9% en volume, avec une taille de pores inférieure à 100 nm.

Par comparaison, une suspension sans acide acétique comparable conduit à un volume poreux ouvert de l'ordre de 25% en volume, avec une taille de pores comprise entre 500 nm et 10 $\mu$m.

La présence de l'acide acétique conduit donc à l'obtention d'un matériau durci bien densifié, présentant une faible porosité, caractérisée par un faible volume poreux et une faible taille de pores. La plus faible porosité contribue alors à l'obtention de caractéristiques mécaniques améliorées.

### EXEMPLE 6

On a préparé une suspension comme à l'exemple 1, sauf que l'on ajoute en outre 29 % en poids de sable par rapport au poids du ciment et sable et 5% en volume par rapport au ciment de fibres.

Le sable utilisé est un sable provenant de Fontainebleau dont les grains sont inférieurs à 200 $\mu$m et d'un diamètre moyen $d_{50}$ de 168 $\mu$m.

Les fibres utilisées sont des fibres de verre (fibres vetrotex cem-fil de Saint Gobain). Il s'agit de fibres longues unidirectionnelles regroupées en toron de 1000 unités, chacune possédant un diamètre de 14 $\mu$m.

La résistance à la rupture du matériau durci est de l'ordre de 50 MPa.

**Revendications**

1. Suspension de ciment comprenant, par rapport à la masse de ciment :

   - 22 à 35 % en poids d'eau ;
   - 1 à 10 % en poids d'acide acétique;
   - jusqu' à 8 % en poids de plastifiant ; et
   - 0 à 2 % en poids de dispersant et présentant une viscosité apparente pour le gradient de vitesse de coulage de 0,5 à 2 Pa·s.

2. Suspension selon la revendication 1, dans lequel le ciment est un ciment alumino-calcique.

3. Suspension selon la revendication 2, dans laquelle le plastifiant est choisi parmi le groupe des polyalkylèneglycols, tels que le polyéthylène glycol et des phtalates, tel que le dibutylphtalate.

4. Suspension selon l'une des revendications 1 à 3, dans laquelle le dispersant est choisi parmi les poly(méth)acrylates d'ammonium, le polynaphtalène sulfonates de sodium et les acides carboxyliques en $C_1$ à $C_4$, ainsi que leurs mélanges.

5. Suspension selon l'une des revendications 1 à 4, comprenant en outre 0,01 à 10 % en volume de fibres.

6. Suspension selon la revendication 5, dans laquelle les fibres sont des fibres de verre ou des fibres naturelles.

7. Suspension selon l'une des revendications 1 à 6, dans laquelle le ciment comprend 60 % à 80 % en masse d'alumine.

8. Suspension selon l'une des revendications 1 à 7, présentant une viscosité apparente entre 0.5 et 2 Pa.s pour le gradient de coulage..

9. Procédé de préparation de la suspension selon l'une des revendications précédentes, comprenant les étapes de :

   i) dispersion du ciment dans un solvant, le cas échéant à l'aide d'un dispersant ;
   ii) addition le cas échéant d'un liant et/ou d'un plastifiant ;
   iii) homogénéisation ; et, si nécessaire
   iv) désaération ;

10. Procédé de préparation de pièces de ciment, comprenant les étapes de:

   a. fourniture d'un support ou d'un moule;
   b. introduction du réservoir par la suspension selon l'une des revendications 1 à 8 positionné sur le support ou le moule ;

c. coulage d'une quantité appropriée de ladite suspension par laminage à partir d'un réservoir sur ledit support.

**11.** Procédé selon la revendication 10, dans lequel le support est mobile.

**12.** Procédé selon la revendication 10, dans lequel le réservoir est mobile.

**13.** Procédé selon l'une des revendications 9 à 13, comprenant en outre l'étape de :

d. consolidation de la pièce en milieu humide.

**14.** Procédé selon la revendication 13, dans laquelle le milieu humide est de l'air saturée en humidité ou l'eau.

**15.** Pièce de ciment susceptible d'être obtenu par le procédé selon l'une des revendications 9 à 14.

**16.** Pièce selon la revendication 15, sous forme de film présentant une épaisseur de 25 à 3000 $\mu$m.

**17.** Utilisation d'une pièce de ciment selon l'une des revendications précédentes à titre de substrat pour l'électronique.

**Claims**

**1.** Suspension of cement comprising, based on the cement weight:

- 22 to 35 % by weight of water;
- 1 to 10 % by weight of acetic acid;
- up to 8 % by weight of plasticizer; and
- 0 to 2 % by weight of dispersing agent and having an apparent viscosity of 0.5 to 2 Pa.s for the casting speed gradient.

**2.** Suspension as claimed in claim 1, in which the cement is an aluminium-calcium cement.

**3.** Suspension as claimed in claim 2, in which the plasticizer is selected from the group consisting of polyalkylene glycols such as polyethylene glycol and phthalates such as dibutyl phthalate.

**4.** Suspension as claimed in one of claims 1 to 3, in which the dispersing agent is selected from the group comprising ammonium poly(meth)acrylates, polynaphthalene sodium sulfonates and $C_1$ to $C_4$ carboxylic acids and mixtures thereof.

**5.** Suspension as claimed in one of claims 1 to 4, further comprising 0.01 to 10 % by volume of fibres.

**6.** Suspension as claimed in claim 5, in which the fibres are glass fibres or natural fibres.

**7.** Suspension as claimed in one of claims 1 to 6, in which the cement comprises 60 % to 80 % by weight of alumina.

**8.** Suspension as claimed in one of claims 1 to 7, having an apparent viscosity of between 0.5 and 2 Pa.s for the casting gradient.

**9.** Method of preparing the suspension as claimed in one of the preceding claims, comprising the steps of:

i) dispersing the cement in a solvent, if necessary with the aid of a dispersing agent;
ii) adding a binder and/or a plasticizer if necessary;
iii) homogenisation; and, if necessary,
iv) deaeration.

**10.** Method of preparing pieces of cement, comprising the steps of:

a. providing a support or a mould;

b. introducing the suspension as claimed in one of claims 1 to 8 into a reservoir positioned on the support or mould;

c. casting an appropriate quantity of said suspension from a reservoir onto said support by lamination.

11. Method as claimed in claim 10, in which the support is movable.

12. Method as claimed in claim 10, in which the reservoir is movable.

13. Method as claimed in one of claims 9 to 13, further comprising the step of:

d. consolidating the piece in a humid environment.

14. Method as claimed in claim 13, in which the humid environment is air saturated with moisture or water.

15. Piece of cement obtained by the method as claimed in one of claims 9 to 14.

16. Piece as claimed in claim 15 in the form of a film with a thickness of 25 to 3000 $\mu$m.

17. Use of a piece of cement as claimed in any one of the preceding claims as a substrate for electronics.

**Patentansprüche**

1. Zementsuspension, die in Bezug auf die Zementmasse enthält:

- 22 bis 35 Gew.-% Wasser
- 1 bis 10 Gew.-% Essigsäure;
- bis zu 8 Gew.-% Weichmacher; und
- 0 bis 2 Gew.-% Dispersionsmittel, das eine sichtbare Viskosität für den Fließgeschwindigkeitsgradienten von 0,5 bis 2 Pa · S aufweist.

2. Suspension nach Anspruch 1, in der der Zement ein Aluminum-Calcium-Zement ist.

3. Suspension nach Anspruch 2, in der der Weichmacher gewählt ist aus der Gruppe der Polyalkylenglycole, etwa Polyethylen-Glykol, und der Phtalate, etwa Dibutylphtalat.

4. Suspension nach einem der Ansprüche 1 bis 3, in der das Dispersionsmittel gewählt ist aus Ammonium-Poly(meth) acrylaten, Natrium-Polynaphtalen-Sulfonaten und Carboxylsäuren von $C_1$ bis $C_4$ sowie ihren Gemischen.

5. Suspension nach einem der Ansprüche 1 bis 4, die außerdem 0,01 bis 10 Vol.-% Fasern enthält.

6. Suspension nach Anspruch 5, in der die Fasern Glasfasern oder Naturfasern sind.

7. Suspension nach einem der Ansprüche 1 bis 6, in der der Zement 60 bis 80 Massen-% Aluminiumoxid enthält.

8. Suspension nach einem der Ansprüche 1 bis 7, die eine sichtbare Viskosität für den Fließgradienten im Bereich von 0,5 bis 2 Pa · s aufweist.

9. Verfahren zum Zubereiten der Suspension nach einem der vorhergehenden Ansprüche, das die folgenden Schritte umfasst:

i) Dispergieren des Zements in einem Lösungsmittel, gegebenenfalls mit Hilfe eines Dispersionsmittels;
ii) gegebenenfalls Hinzufügen eines Bindemittels und/oder eines Weichmachers;
iii) Homogenisieren; und, falls notwendig,
iv) Entlüften.

10. Verfahren zum Vorbereiten von Zementteilen, das die folgenden Schritte umfasst:

a. Bereitstellen eines Trägers oder einer Form;

b. Einfüllen der Suspension nach einem der Ansprüche 1 bis 8 in den Vorratsbehälter, der über dem Träger oder der Form positioniert ist;
c. Gießen einer geeigneten Menge der Suspension durch Kalandrieren aus einem Vorratsbehälter über den Träger.

**11.** Verfahren nach Anspruch 10, wobei der Träger beweglich ist.

**12.** Verfahren nach Anspruch 10, wobei der Vorratsbehälter beweglich ist.

**13.** Verfahren nach einem der Ansprüche 9 bis 13, das außerdem den folgenden Schritt umfasst:

d. Verfestigen des Teils in einem feuchten Medium.

**14.** Verfahren nach Anspruch 13, wobei das feuchte Medium mit Feuchtigkeit gesättigte Luft oder Wasser ist.

**15.** Zementteil, das durch das Verfahren nach einem der Ansprüche 9 bis 14 erhalten werden kann.

**16.** Teil nach Anspruch 15 in Form einer dünnen Schicht, die eine Dicke im Bereich von 25 bis 3000 $\mu$m aufweist.

**17.** Verwendung eines Zementteils nach einem der vorhergehenden Ansprüche als Substrat für die Elektronik.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **B.P. Borglum et al.** Advanced Cement Based Materials. Elsevier Science Publ, Octobre 1993, vol. 1, 47-50
- **Y.El Hafiane et al.** *J.Phys. IV France,* 2005, vol. 123, 189-192
- **T. Chartier.** Procédés de mise en forme des céramiques » dans « Matériaux et processus céramiques. Hermès Science Publication, 2001, 141-217